# EUROPEAN PATENT SPECIFICATION

(11) **EP 3 991 956 B1**
(45) Date of publication and mention of the grant of the patent: **09.07.2025**
(21) Application number: 21213793.9
(22) Date of filing: 10.12.2021
(51) Int. Cl.: B29D 30/06

(54) **IMPROVED TYRE MOULD HAVING MODIFIED SECTORED SIDEWALL PLATES**
VERBESSERTE REIFENFORM MIT MODIFIZIERTEN SEKTORIERTEN SEITENWANDPLATTEN
MOULE DE PNEU AMÉLIORÉ AYANT DES PLAQUES DE PAROI LATÉRALES MODIFIÉES ET DIVISÉES EN SECTEURS

(30) Priority: 30.10.2020 IN 202041047442
(43) Date of publication of application: 04.05.2022
(73) Proprietor: Apollo Tyres Ltd., 602105 Tamil Nadu (IN)
(72) Inventor: Peedikakkandy, Prithviraj, 673009 Kerala (IN); Vijayan, Baburaj Chiralayath Njalil, 600044 Tamil Nadu (IN)
(74) Representative: Michalski Hüttermann & Partner Patentanwälte mbB

(56) References cited:
- EP-A1- 3 705 284
- CN-U- 201 592 499
- JP-A- 2012 236 303
- JP-A- 2015 202 649
- US-A1- 2016 167 326
- US-A1- 2016 193 796
- US-A1- 2019 193 354
- US-A1- 2019 193 355

## Description

This invention relates to an improved tyre mould having modified sectored sidewall plates. More particularly, the invention relates to a modified tyre mould the construction of which does away with the necessity for the employment of any separate means or mechanism to remove any air or gas trapped within the between the mould sidewall plate and the green tyre during curing of the latter.

Like any retail product today, the salesworthiness of a tyre depends to a very large extent on its outward appearance. In fact, tyres are no longer just performance oriented auto parts. They must be aesthetically appealing as well. To provide a particularly pertinent example, a tyre sidewall in the form in which it is manufactured is nowhere as appealing as the sidewall of the same tyre that reaches the retail market.

During the step of curing in the overall manufacture of a tyre, air or other gas can be trapped between the sidewall of the uncured or green tyre and the contacting sidewall of the mould. It is absolutely essential that any air trapped between the tyre surface and the sidewall plate of the mould be given an escape route since if it were to be allowed to remain, it would distort the tyre and give rise to an unacceptable appearance on the surface thereof.

Over the years, several attempts have been made to solve the problem of enabling the removal of entrapped air between the surface of the tyre sidewall and the sidewall plate of the mould but these have met with only limited success and all have suffered from one drawback or another.

The earliest attempts to solve the problems and adverse effects which the presence of trapped air or gas had on the finished tyre focussed directly on the space where the gas was entrapped. The procedure which these earliest attempts resorted to in order to enable the release of air trapped between the surface of a cured tyre and the sidewall of the mould is commonly referred to as venting. This procedure, which in modified forms can still be found in operation today, consists in the provision of micro-vents in the sidewall plate of the tyre mould which permitted the trapped air to escape therethrough.

Unfortunately, the provision of these micro-vents while achieving the objective of allowing trapped air to exit, brought with it a serious drawback. As can be imagined, the trapped air or gas between the tyre sidewall and the sidewall of the mould is under reasonably high pressure. Accordingly, when it exits through the micro-vents in the sidewall plate of the mould, it tends to take with it small amounts of the still uncured rubber of the green tyre. This results in the formation of protrusions or "hairs" of rubber on the surface of the resultant tyre which present an unseemly appearance and need to be trimmed off in a later operation. This additional step of trimming in addition to rendering the procedure less efficient in that it increases the overall time for the production of a finished tyre of the desired quality also adds to the expense in the production of the tyre.

The next effort to solve the problems which arose from the entrapment of air or gas between the side wall of the green tyre and the side wall of the mould attempted to take advantage of another inevitable step in the production of a commercial tyre. As with all commercially available products, finished tyres also have to incorporate a certain amount of exterior embellishments reflecting the owner's name, trade mark, advertising logo, mandatory information and so on. Conveniently, this essentially commercial material is usually provided on the sidewall of the finished tyre which in turn meant that the surface of the sidewall plate of the tyre mould which came into contact with the sidewall of the tyre had to be embossed or debossed with the necessary advertising and/or commercial material which, when the tyre was being produced within the mould, imprinted itself on or embossed/debossed itself into the green tyre sidewall.

This rather rudimentary attempt to effect the removal of air trapped between the tyre sidewall and the sidewall plate of the tyre mould was linked to the transfer of such advertising or commercial material to the sidewall plates of a tyre mould each of which consisted of a single unitary plate having no divisions or sectors. The procedure for providing the exterior advertising embellishments on to the sidewall of such a tyre mould consisted of transferring the desired material on to a metal substrate having a depth or thickness approximately equal to the depth or thickness of the mould sidewall, cutting from the substrate the portion bearing the advertising material to form a separate component known as a slug and embedding the slug bearing the advertising or commercial matter into a correspondingly shaped aperture cut into each sidewall plate of the mould. The embedding of the slug within the mould sidewall resulted in the creation of a lengthy interface between the external perimeter of the slug and the internal perimeter of the aperture cut into the sidewall plate of the mould. Since these interacting interfaces were not in completely sealed relationship, they allowed for the release or escape of air or gas trapped between the tyre sidewall and the sidewall of the mould to the atmosphere.

In the context of the invention, especially the sidewall plate(s), the terms "sector" and "sectored" is not as strictly defined as, for example, the term "circular sector" in geometry; here, it rather describes a segment respectively a segmentation, which can, however, be assigned to a corresponding sector.

As can be well imagined, the particular construction described involving the slug with the advertising matter thereon was not particularly optimum with respect to the removal of accumulated air or gas since it was conceived for fulfilling an entirely different objective of displaying advertising matter and not essentially for the purpose of removing the trapped air or gas.

A further attempt to give effect to the removal of trapped air or gas during the manufacture of a tyre involved the formation of the sidewall plates of a tyre mould as a series of concentric cylindrical sectors located one within the other thereby providing each sidewall plate as an annulus with the concentric cylinders contacting one another at circular circumferential interfaces. The theory behind this particular construction was to provide an increased number of interfaces extending circumferentially over the entire surface of the sidewall plate and thereby afford enhanced and easier ability for the escape of air or gas trapped between the tyre sidewall and the mould sidewall.

An example of a mould embodiment providing circumferential interfaces for venting trapped air or gas is described in Chinese Patent No. 201244883Y which provided for the introduction of circumferential inserts for venting trapped air. However, this particular construction rendered it difficult to identify or define the exact position of air entrapped between a tyre sidewall and a mould sidewall while curing a tyre in the mould during the designing stage. Hence, deciding the position of circumferential inserts was difficult. Also, this embodiment called for each of the interfaces between concentric sectors to be subjected to machining to enable efficient contact and this resulted in increased costs. What is more, circumferential inserts could remove entrapped air from only a fixed pitch circle diameter (PCD) or diametrical positions.

Accordingly, there has existed a need for the provision of a tyre mould embodying an improved sidewall design which eliminated the need both for the provision of any venting means or mechanisms in the mould sidewall as well as the necessity of the subsequent step of removing undesirable protrusions from the finished tyre.

EP1254750A2 has proposed the employment of an additional means in the form of a separate insert such as a vent sleeve introduced into a micro gap between a hole having its opening in the mould surface in order to vent trapped air.

Published Japanese Patent Application No. 2002307441 (A) discloses a mould sidewall plate that is divided into two or more cylindrical rings. However, as already emphasised above, it is difficult to identify or define the exact position of entrapped air in a mould while curing a tyre therein during the designing stage of a tyre. Hence, deciding the diameter of the cylindrical rings and their positioning becomes a challenge as the cylindrical rings can remove entrapped air from only a fixed pitch circle diameter or diametrical positions. Moreover, manufacturing a whole sidewall ring for a mould sidewall plate is challenging due to its form factor and instability.

Patent application EP 3 705 284 A1 discloses a tyre vulcanizing mould comprising a sidewall ring for moulding a sidewall portion of a tyre. Another tyre vulcanization mold comprising a plurality of side pieces is disclosed in patent application US 2019/193355 A1.

Yet another alternative to micro-vents is the concept of providing spring vents.

Spring vents are pre-assembled spring actuated vent valves which are press-fitted into holes drilled into the sidewall plate of a tyre mould. With the green tyre in place within the tyre mould, the curing process commences. In the course of such curing, air or gas trapped between the tyre sidewall and the mould sidewall needs to be released to the atmosphere. During this time, the valves of the spring vents stay open but close automatically as soon as the liquid rubber starts to enter the valve bore. Thus, spring vents allow the air or gas to exit the mould but prevent the formation of "hairs" or stubble on the surface of the moulded tyre thus maintaining the tyre surface relatively smooth and with minimum flaws.

The drawback to spring vents is their increased cost, not only to install but also to maintain. Indeed, spring vents are more costly and much more difficult to maintain than micro-vents. Moreover, all tyre moulds require periodic cleaning and the cleaning of a tyre mould with spring vents is a more difficult task than a mould with merely micro-vents.

With the above-mentioned drawbacks and deficiencies in mind, it is a primary object of the invention to provide an improved tyre mould which without having recourse to any of the prior art means, is capable of producing a vehicle tyre without any unseemly visual defects such as bulges or protrusions.

A more specific object of the invention is the provision of such an improved tyre mould the construction of which enables any air or gas trapped between the sidewall of the tyre and the sidewall of the mould to be dispersed automatically to the atmosphere without the necessity of having to provide any micro-vents or spring vents in the sidewalls of the mould

A still more specific object of the invention is the provision of such an improved tyre mould wherein any air or gas trapped between the sidewall of the tyre and the sidewall of the mould is dispersed to the atmosphere via recesses between each pair of a plurality of sector units forming part of the upper and lower annular sidewall plates of the mould, the air or gas escaping through the contacting upper edges or sector partings of such pairs of sector units

Yet another object of the invention is the provision of an improved mould for a tyre in which the sector units forming part of the upper and lower sidewall plates of the mould are located in even radial formation around the circumference of the mould thereby covering the entire area of the sidewalls and thus ensuring the most efficient removal of all entrapped air.

As a result of their research and inventive efforts, the applicants have developed an improved construction for the mould of a tyre which enables the removal of air and gas trapped between the sidewall of the tyre and the sidewall of the mould without the provision of any vents, micro-vents or spring vents, in the sidewalls of the mould thereby enabling the production of a aesthetically acceptable tyre without unsightly bumps and bulges on its surface which require removal in a separate operation.

The present invention is based on the concept of providing each of the sidewall plates of the mould as an assembly of multiple juxta-posed sector units supported on an annular backing plate with a recess provided between each pair of adjacent sector units at the base thereof whereby air or gas entrapped between the sidewall of the tyre and the sidewall of the mould finds its way through the interface between the upper edges of the opposing faces of each pair of juxta-posed sector units into the recess at the base thereof and exits from such recess to the atmosphere. The interface between the upper edges of the opposing faces of each pair of juxta-posed sector units is referred to as the sector parting and the removal of the air therethrough is effected without the provision of conventional venting mechanisms in the mould sidewall.

The distance between the front and rear edges of the backing plate measured along the sector parting is referred to as the "parting diameter".

With the above-identified objects in mind, the present invention provides an improved tyre mould having modified sectored sidewall plates capable of the production of tyres which do not require the subsequent removal of unsightly bulges or protrusions from the sidewalls thereof, said tyre mould being provided between oppositely disposed upper and lower container plates with a sidewall plate located against each of said container plates characterized in that each sidewall plate consists of an annular backing plate provided within its inner surface with a circumferential guide channel, said guide channel being adapted to receive therein and be engaged by a plurality of individual sector units, the backing plate and the sector units together constituting a sidewall plate assembly, each sector unit being juxta-posed with respect to the next unit in non-sealed relationship with a recess or clearance between the opposing lateral surfaces of each pair of juxta-posed units at the base thereof, the upper edges of said opposing surfaces of each pair of units contacting each other along a line of length forming an interface known as a sector parting, whereby any air or gas entrapped between the sidewalls of the tyre being cured and the two sidewall plate assemblies of the mould in contact therewith passes through the several sector partings along the upper edges of opposing faces of each pair of juxta-posed sector units to collect in the recesses between each pair of sector units and exit therefrom to the atmosphere.

The modified sectored sidewall plates are thus sectored sidewall plates with the aforementioned structure and an improved tyre mould is accordingly understood to be a tyre mould with the aforementioned form properties including these sectored sidewall plates.

Based on the inventive construction, the width of each sector unit tapers downward from the outer circumference of the sidewall assembly towards the inner circumference thereof to the location of each tyre bead ring of the mould.

According to a preferred feature, the sidewall plate assembly of the tyre mould of the invention is provided with locking means for ensuring that each of the sector units is assembled in the correct order.

The said locking means preferably comprises a series of inter-engaging locator pins with each pair of locator pins provided with inter-engaging male and female sockets which, when engaged, ensure that said sector units are assembled in the correct order thereby eliminating the possibility of their incorrect assembly and rendering the positioning of each sector unit unique.

In a particularly desirable embodiment, each pair of said locator pins incorporating inter-engaging male and female sockets is provided respectively either in the guide channel of the backing plate and in the base of each sector unit or in the opposing lateral surfaces of each sector unit, the said sockets being adapted to engage each other and thereby retain the sectors units in their unique position.

The locator pins can be circular or polygonal shaped in cross-section.

The applicants have found that the sidewall assembly of the mould of the present invention should consist of not less that four sector units with the number of sector units being capable of being increased depending on the diameter of the tyre being manufactured

In accordance with a still further preferred feature of the improved tyre mould of the invention, the plurality of individual sector units disposed within the guide channel of the backing plate and which together with the backing plate constitute the sidewall plate assembly is provided at the end of the assembled sector units with a locking unit in pressured contact with last sector unit of the sidewall plate assembly thereby ensuring that there is no undesirable gap between each of the sector units and that the final sector unit of the assembly is in precise alignment with and relative to the other sector units.

Conveniently, the locking unit can comprise a rectangular plate disposed horizontally within the channel of the backing plate in pressured contact with the last sector unit of the assembled units. For even greater security, the rectangular plate forming the locking unit is provided with securing means in the form of jacking screws which enable the entire assembly of sector units to be locked firmly in place within the circumferential channel of the backing plate.

The present invention will now be described in greater detail with reference to the accompanying drawings in which:
Figure 1 is an exploded transverse sectional view of a conventional tyre mould for producing a vehicle tyres;
Figure 2 is an isometric view of one of the two annular sidewall plate assemblies of the improved tyre mould according to the present invention with the sidewall plate removed and comprising a minimum of four sector units;
Figures 3A, 3B, 3C and 3D are transverse sectional views of an annular sidewall plate assembly of the tyre mould of the present invention showing four alternative embodiments of the sector units of the assembly disposed within the annular guide channel of a backing plate;
Figure 4 is likewise a transverse sectional view of an annular sidewall plate assembly similar to those of Figures 3A, 3B, 3C and 3D but viewed from one end thereof and illustrating additional embodiments of the invention;
Figure 5 is a view of an annular sidewall plate similar to that of Figure 4 but viewed from the inner circumference of the sidewall plate assembly and identifying one arrangement for provision of the locating means for determining the position and order of the sector units on the backing plate;
Figure 6 is a plan view from above of the annular sidewall plate assembly shown in Figure 5;
Figure 7 is a transverse sectional view of an annular sidewall plate assembly similar to that of Figure 4 but viewed from the opposite end thereof and identifying an alternative arrangement for provision of the locating means for determining the position and order of the sector units on the backing plate;
Figure 8 is an end on view of the annular sidewall plate assembly shown in Figure 7; and
Figure 9 is a transverse sectional view of the annular sidewall plate assembly as shown in Figure 4 but viewed from the outer circumference of the said sidewall plate assembly and identifying the provision of a recess or clearance between the opposing planar surfaces of each pair of adjacent sector units at the base thereof for collection and subsequent emission of any entrapped air or gas.

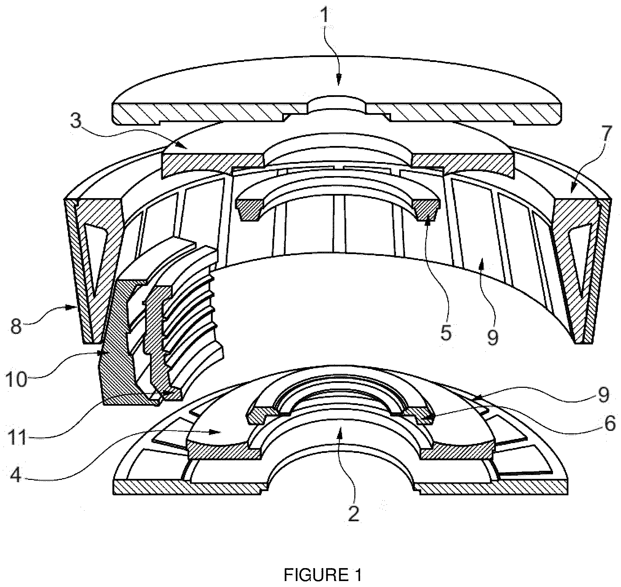

Referring to Figure 1, a conventional mould for the manufacture of a vehicle tyre consists of a top container plate (1) and a bottom container plate (2) located at the top and bottom ends of the mould. Connected below the top container plate (1) and above the bottom container plate (2) are upper and lower sidewall plates (3) and (4), respectively. Connected in turn to the upper and lower sidewall plates (3) and (4) are the top bead ring (5) and the bottom bead ring (6), respectively. Disposed between the two bead rings (5) and (6) is the actuator assembly (7) within which the green tyre is located for the subsequent curing thereof. The actuator assembly (7) is provided with an external insulation cover (8) and an internal wall of wear plates (9). Sitting against the wear plates is the segment shoe (10) on which the tread (11) of the tyre being manufactured is formed.

The essence of the present invention resides in the modifications effected to the upper and lower sidewall plates (3) and (4) which modifications enable the removal of air or gas trapped between the green tyre being cured and the sidewall of the mould without the necessity of providing any additional means in the mould sidewall for venting such air which means are responsible for imparting unseemly bulges or protrusions to the finished tyre.

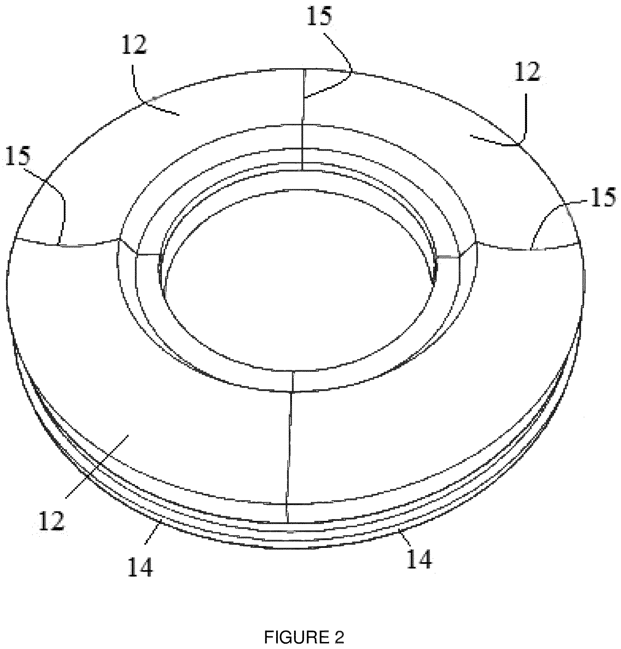

Figure 2 presents an isometric view of one of the two sidewall plate assemblies of the tyre mould according to the present invention. Depending on the size of the tyre being manufactured, the sidewall plate can comprise multiple sector units (12). The applicants have employed a sidewall plate split into 36 sector units. However, while the maximum number of units depends on the tyre size and dimensions, it has been ascertained that the least number of sector units that can conveniently be employed is four. The sidewall plate assembly shown in Figure 2 consists of a sidewall plate composed of four sectors units (12) snugly engaged within the circumferential guide channel (not visible) of a backing plate (14) of the assembly. The backing plate (14) determines the diameter of each sector unit (12) and consequently that of the sector parting (15). The sector units (12) in combination with the backing plate (14) and its guide channel (13) together form each of the top and bottom sidewall plate assemblies.

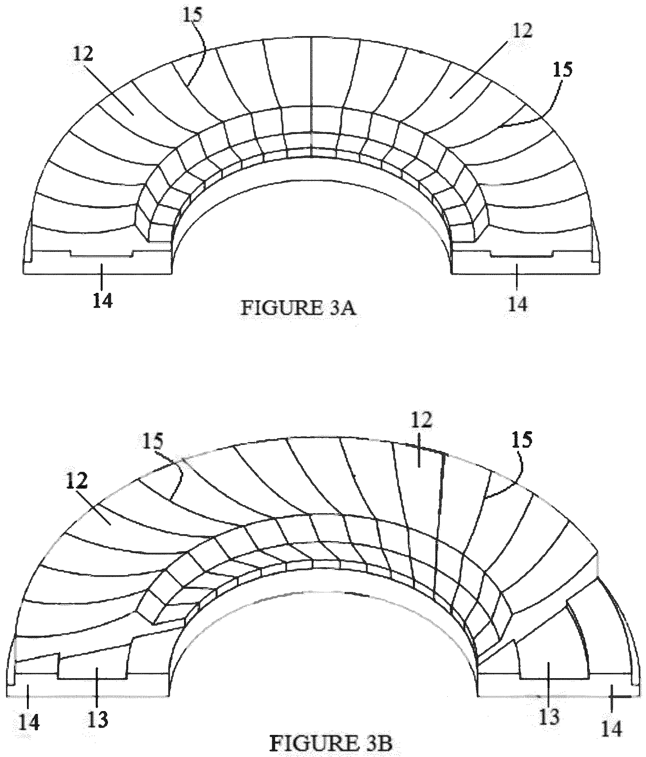

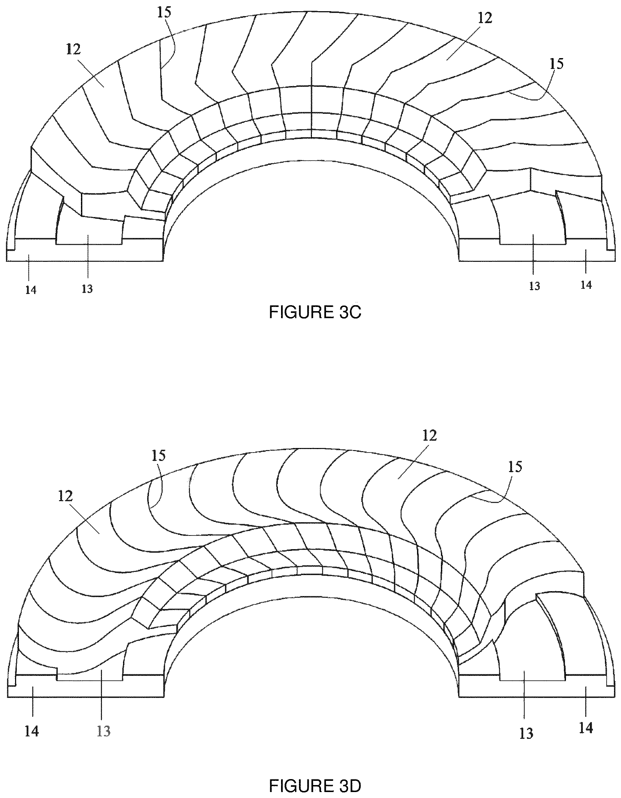

As shown in the transverse sectional views of the annular sidewall plate assemblies of the inventive mould in Figures 3A, 3B, 3C and 3D, the width of each sector unit (12) tapers from the outer circumference of the mould towards the location of each tyre bead ring (5) at the inner circumference of the tyre sidewall. The profile of each sector unit (12) can be straight as in Figure 3A, curved as in Figure 3B, formed with an angled surface as in Figure 3C or wave-form as in Figure 3D.

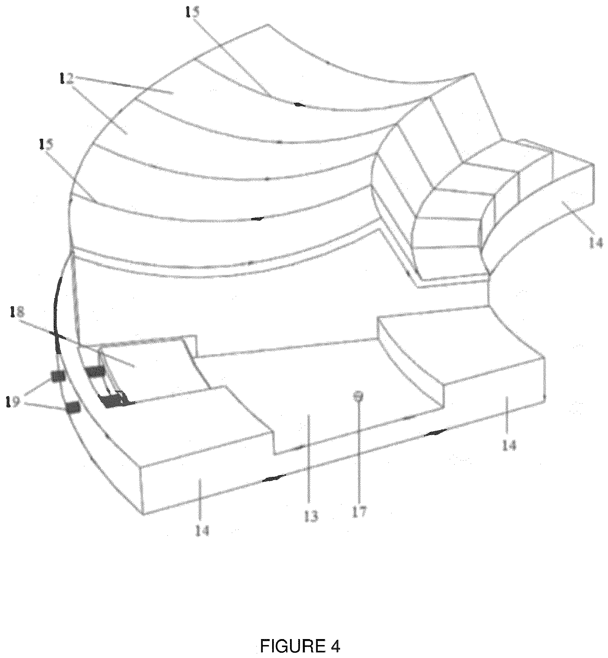

While transverse sectional views of the sidewall plate assemblies of the tyre mould of the invention are shown in Figures 3A, 3B, 3C and 3D, the invention is best illustrated with reference to Figures 4 to 9 of the drawings. Figure 4 shows in detail a view of a transverse section of the improved annular sidewall plate assembly of the mould of the present invention. This mould gives effect to the production of tyres which do not suffer from the drawbacks of malformation as a result of trapped air or gas trapped between the sidewall of the tyre being cured and the sidewall of the tyre mould.

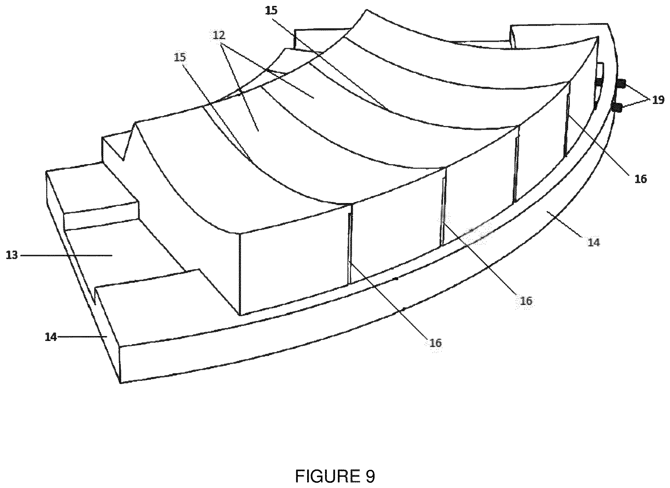

As shown in Figure 4, the sidewall plate assembly of the improved mould consists of an annular backing plate (14) having provided within its upper surface a circumferential guide channel (13), said channel (13) being adapted to receive therein a plurality of individual sector units (12), each unit (12) being juxta-posed with respect to the next unit (12) with a recess or clearance (16) [see Figure 9] between the opposing planar surfaces of each pair of adjacent sector units (12), the upper edges of the said planar surfaces of adjacent units (12) contacting each other in non-sealed relationship along a line forming an interface referred to as a sector parting (15) whereby any air or gas trapped between the sidewall of the green tyre being cured and the sidewall plate assembly of the tyre mould passes through the respective sector partings (15) to collect in the recesses (16) at the base of the adjacent planar surfaces and exits from said recesses (16) to the atmosphere.

Figure 4 of the drawings also discloses a preferred feature of the invention. This consists of locating means in the form of a series of inter-engaging locator pins (17) provided in a surface of the backing plate (14) and in a contacting surface of each sector unit (12). These locator pins (17), only one of which is visible in Figure 4, provided within the surface of the guide channel (13) of the backing plate (14), ensure that each of the sector units (12) is assembled in the correct order thus eliminating the possibility of assembling the sector units (12) in an incorrect order. The position of each sector unit (12) on the backing plate (14) or, more accurately, in the guide channel (13) of said backing plate (14) is unique thereby making it impossible for the order in which the sector units (12) are set out to altered.

Conveniently, each locator pin (17) incorporates male and female sockets and in the embodiment illustrated in Figure 4 of the drawings, such sockets are provided respectively in the guide channel (13) and in the base of each sector unit (12), the said sockets being adapted to engage each other and thereby keep the sectors units (12) in place. The locator pins (17) may be circular or polygonal shaped in cross-section. Depending on the diameter of the tyre being manufactured, the number of sector units (12) can be increased to improve the exit of trapped air or gas.

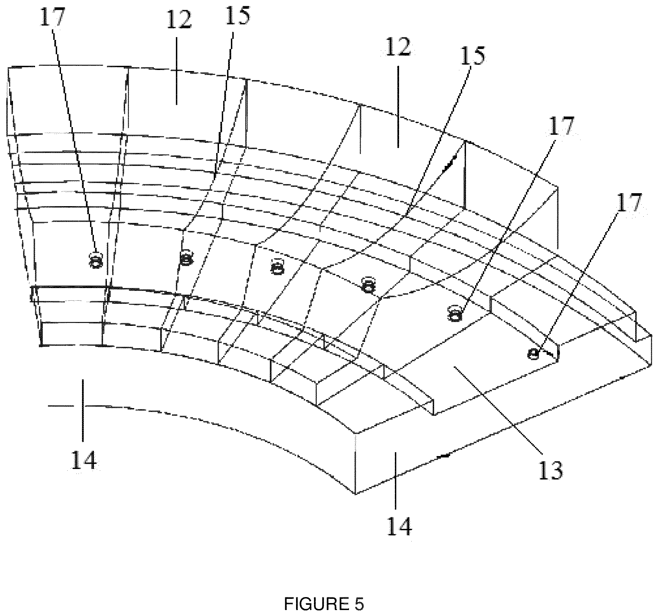

Figure 5 shows in greater detail the arrangement of locator pins (17) in the surface of channel (13) and their engagement with corresponding pins in the bottom of each sector unit (12). For greater understanding of this feature, the sector units (12) in this figure are shown in non-solid form.

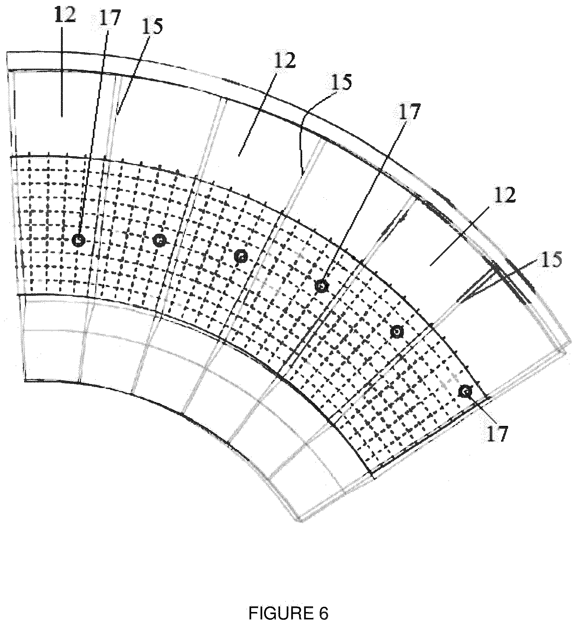

Figure 6 is a view from above of the annular sidewall plate assembly shown in Figure 5 from which the arrangement of inter-engaging locator pins (17) can be clearly seen.

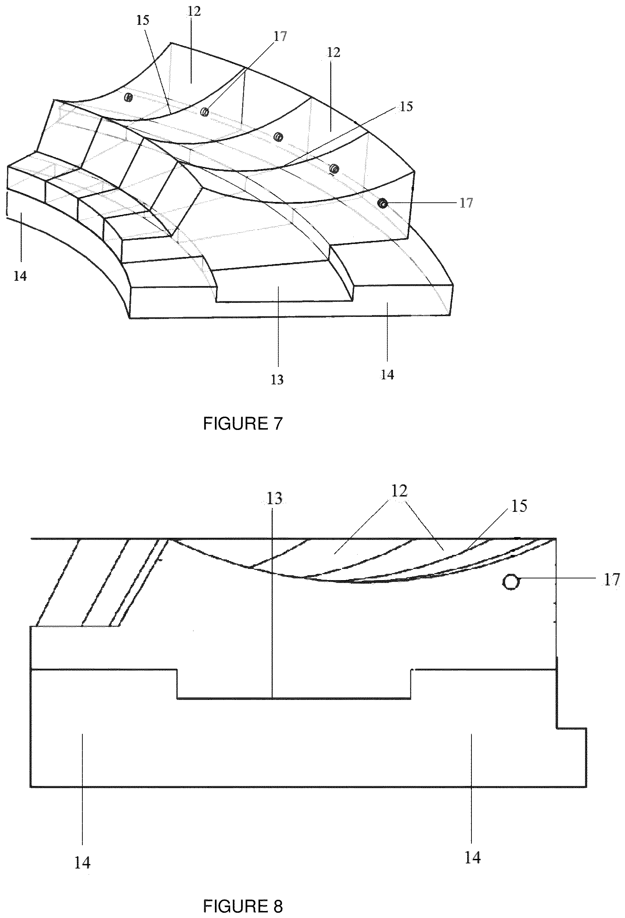

According to an alternative embodiment shown in Figures 7 and 8, the locator pins (17) instead of being provided in the surface of the guide channel (13) and the base of each sector unit (12) are provided in the lateral planar surfaces of each adjacent sector unit (12) whereby the socket of a locator pin (17) in the planar surface of one sector unit (12) is adapted to engage with the socket of a pin (17) provided in the opposing planar surface of an adjacent sector unit (12).

Referring once more to Figure 4 of the drawings, this discloses yet a further preferred feature of the present invention. This consists in the provision at the end of the assembly of sector units (12) of a locking unit (18) in the form of a rectangular plate disposed horizontally within the channel (13) of the backing plate (14) in pressured contact with last sector unit (12) of the assembly. The last sector unit of the assembly is thus popularly referred to as the "locking sector" and is what holds the sector assembly firmly in place. The provision of the locking unit (18) ensures that there is no undesirable gap between each of the sector units (12) and that the final locking sector unit (12) of the assembly is not misaligned or offset relative to other sector units (12). During assembly of the sector units (12) within the channel (13) of the backing plate (14), the plate comprising the locking unit (18) must be slid into channel (13) from the side unlike the sector units (12) which are introduced into channel (13) of the backing plate (14) from above.

For even greater security, the locking unit (18) is provided with securing means in the form of jacking screws (19) which enable the entire assembly of sector units (12) to be locked firmly in place within the circumferential channel (13) of the backing plate (14) the dimensions of which, as stated earlier, determine the parting diameter of each sector unit (12) and therefore the diameter of the sidewall plate.

As a still further security measure, each sector unit is fixed to the backing plate (14) by means of securing means such as Allen bolts.

Referring finally to Figure 9 of the drawings, the opposing lateral planar surfaces of each adjacent pair of sector units (12) are machined with zero cold gap. The upper edges of such planar surfaces contact each other linearly in non-sealed relationship to form respective interfaces each constituting a sector parting (15). However, the lower ends of each of these opposing lateral planar surfaces of each pair of sector units (12) are not in contact with each other but are spaced slightly apart thereby defining a recess or clearance (16) between each pair of sector units (12) at the base thereof. The backing plate (14) with its guide channel (13) within which the sector units (12) are assembled is provided with a circumferential groove (not visible) for connecting with the recesses or clearances (16) between each pair of adjoining sector units (12) at the base thereof. This enables air or gas entrapped between the sidewall of the green tyre being cured and the sector units (12) forming the sidewall assembly of the tyre mould to pass through the several sector partings (15) and collect in the recesses (16) below and to escape therefrom to the atmosphere. This construction does away entirely with the need to provide additional or external means in the tyre mould for enabling escape of the trapped air or gas and thus prevents the formation of unsightly bulges or protrusions on the surface of the finished tyre necessitating their removal in a subsequent time-consuming operation.

The improved mould of the present invention is assembled in the conventional manner without any problems being encountered. The upper and lower bead rings (5,6) are fixed on to the improved sidewall plate assemblies which in turn are fixed to the container plates (1,2) and the segments are assembled on to the segment shoes (10). Standard container plates, tread segments and bead rings in combination with the improved sectored sidewall plate assembly of the present invention together form the entire tyre mould.

### EXAMPLE

The present invention will be identified more clearly by way of this example which should be considered only illustrative of the invention and must not be construed to be limitative thereof.

Five regular green tyres were cured employing conventional tyre moulds having sidewall plates with micro-vents. The resultant tyres were found to have protrusions on their sidewall surfaces which ruined the aesthetic appeal thereof. To make matters even worse, the tyres did not lend themselves to having the bulges excised or trimmed in view of the risk of damaging irreparably the projected engravings or markings on the sidewalls of the tyres during the trimming operation.

In a second exercise, five similar regular green tyres were cured employing the tyre mould of the present invention with its modified sectored sidewall plates. On completion of the cure, the tyres were subjected to standard visual tyre inspection by qualified tyre inspectors for any defects. Special attention was given to check defects such as lightness, flow cracks or flash. The tyres prepared in the mould of the present invention were also visually compared with the regular tyres for their appearance.

The cured tyres prepared in the tyre mould of the present invention displayed no formation of protrusions or bulges and presented very fine surfaces. They also compared very favourably with tyres produced in moulds provided with spring vents. Indeed, the tyres produced from moulds equipped with spring vents featured several circular flash marks all over the sidewalls of the tyres.

The tests carried out on the five tyres produced in the mould of the present invention were effected employing the following standards:

| **TEST** | **PROCEDURE** | **RELEVANT VALUE(S)** | **EXPLANATION** |
|---|---|---|---|
| Tyre curing | Visual inspection | Subjective test values 1 - 10 | Conventional tyre curing and sidewall aesthetic evaluation |

The detailed results of these tests with explanatory discussions are set out in Table 1 hereunder:

**TABLE 1**

| | | | | | | | |
|---|---|---|---|---|---|---|---|
| **SHORT DESCRIPTION** | Radial Sectored Sidewall Plate design -215/75 R 17.5 size | | | | | | |
| **RESULTS** | The five tyres subjected to the test were tyres produced employing the mould of the present invention having sidewall plates of 215/75 R 17.5 size. | | | | | | |
| | After curing, the cured five tyres were verified for curing-related defects. The results of the tests were as follows: | | | | | | |

| | **SAMPLES** | **CURING RELATED DEFECTS** | | | | | |
|---|---|---|---|---|---|---|---|
| | | Top side | | | Bottom side | | |
| | | Flash | Lightness | Flow crack | Flash | Lightness | Flow crack |
| | Tyre 01 | *WAL | No | No | *WAL | No | No |
| | Tyre 02 | None | No | No | *WAL | No | No |
| | Tyre 03 | None | No | No | *WAL | No | No |
| | Tyre 04 | None | No | No | None | No | No |
| | Tyre 05 | None | No | No | None | No | No |
| | *WAL = Within acceptable limits | | | | | | |
| **CONCLUSION** | As expected, the cured tyres came out without any air entrapment related defects. This established that the sectored sidewall design was responsible for passing to the atmosphere air and gas entrapped between the tyre and the mould sidewall during production of the tyre thereby eliminating entirely the need for the provision of micro-vents in the sidewall of the mould. This led to a significant improvement in the appearance of the cured tyres as compared to that of tyres produced in moulds the sidewalls of which were provided with vents. | | | | | | |

A comparison was effected between tyres produced in conventional moulds provided with micro-vents in their sidewalls, in moulds provided with spring vents in their sidewalls and in the mould of the present invention having the improved sectored sidewalls. The results of this comparison are set out clearly in Table 2 hereafter:

**TABLE 2**

| | **CONVENTIONAL MOULD WITH MICRO-VENTS** | **MOULD WITH SPRING VENTS** | **INVENTIVE MOULD WITH SECTORED SIDEWALLS** |
|---|---|---|---|
| Vent protrusion | Yes (-10mm) | Circular flash (Microns) | None |
| Tyre appearance | Not good (inevitable) | Better | Best |
| Trimming requirement | Yes (but not recommended due to chance of sidewall damage) | No | No |
| Rubber wastage (trimmed vent) | Yes | No | None |
| Vent cleaning cost | Less | High | Zero cost |
| Probability of air venting failure | Less | High (springs not actuating) | Least (due to no additional mechanical parts) |
| Effective air venting area | Medium | Low | High |
| Time and resource required for vent cleaning | High | High | Zero (no cleaning required) |
| Preventive maintenance frequency | Medium | High | Very Low (no cleaning required) |

The improved mould of the present invention presents a number of advantages over moulds of the prior art. First and foremost, the applicants mould embodies efficient means for simultaneous removal of air and gas entrapped within it without having to resort to the provision of vents in the mould sidewall. Thus, the mould of the present invention delivers a tyre free of the bulges and protrusions in the sidewalls thereof which the use of a mould with micro-vents in its sidewalls produces. This does away with the necessity of performing a tedious separate step for removal of the protrusions in order to improve the aesthetics of the tyre.

Secondly, from the manufacturability point of view, the sector units of the tyre mould of the present invention are much easier to manufacture to close tolerances at less cost than tyre moulds having their sidewalls composed of concentric cylindrical sectors or circumferential sidewall inserts. The likelihood of the development of flash on the end product is higher when circumferential inserts are provided due to the precision requirement for such inserts.

The same ease of manufacturability to close tolerances of the sector units is experienced with less cost when compared with the use of a mould provided with concentric cylindrical sectors. For any surface damage, the sectors of the mould of the present invention are easily replaced when compared with a whole ring. Moreover, for any statutory marking or branding changes, relevant sectors can be substituted.

Finally, the mould of the present invention can be used with existing or conventional tyre curing mould containers without requiring changes or modifications to the mould containers.

It must be understood that the terms employed herein for describing the invention are used in a generic and descriptive sense only and not for purposes of limitation. The invention is not limited to the specific embodiments disclosed and other modifications and embodiments thereof will be apparent to and come to mind of persons skilled in the art to which this invention is directed. Such modifications and embodiments are therefore included within the scope of the invention as set out in the appended claims.

## Claims

1. An improved tyre mould having modified sectored sidewall plates capable of the production of tyres which do not require the subsequent removal of unsightly bulges or protrusions from the sidewalls thereof, said tyre mould being provided between oppositely disposed upper and lower container plates (1,2) with a sidewall plate located against each of said container plates (1,2) wherein each sidewall plate consists of an annular backing plate (14) provided within its inner surface with a circumferential guide channel (13),
**characterized in that** said guide channel (13) is adapted to receive therein and be engaged by a plurality of individual sector units (12), the backing plate (14) and the sector units (12) together constituting a sidewall plate assembly, each sector unit (12) being juxta-posed with respect to the next unit (12) in non-sealed relationship with a recess or clearance (16) between the opposing lateral surfaces of each pair of juxta-posed units (12) at the base thereof, the upper edges of said opposing surfaces of each pair of units (12) contacting each other along a line of length forming an interface known as a sector parting (15), whereby any air or gas entrapped between the sidewalls of the tyre being cured and the two sidewall plate assemblies of the mould in contact therewith passes through the several sector partings (15) along the upper edges of opposing faces of each pair of juxta-posed sector units (12) to collect in the recesses (16) between each pair of sector units (12) and exit therefrom to the atmosphere.

2. An improved tyre mould as claimed in claim 1 wherein the backing plate (14) with its guide channel (13) within which the sector units (12) are assembled is provided with a circumferential groove for connecting with the recesses or clearances (16) between the opposing lateral surfaces of each pair of juxta-posed units (12) at the base thereof to facilitate the escape of air or gas trapped between the sidewalls of the tyre being cured and the sidewall plate assemblies of the mould to the atmosphere.

3. An improved tyre mould as claimed in claim 1 or 2 wherein the width of each sector unit (12) tapers downward from the outer circumference of the sidewall assembly towards the inner circumference thereof to the location of each tyre bead ring (5) of the mould.

4. An improved tyre mould as claimed in any one of claims 1 to 3 wherein the profile of each sector unit (12) is straight, curved, formed with an angled surface or wave-form.

5. An improved tyre mould as claimed in any one of claims 1 to 4 wherein said sidewall plate assembly is provided with locking means for ensuring that each of the sector units (12) is assembled in the correct order.

6. An improved tyre mould as claimed in claim 5 wherein said locking means comprises a series of inter-engaging locator pins (17) with each pair of locator pins (17) provided with inter-engaging male and female sockets which, when engaged, ensure that said sector units (12) are assembled in the correct order thereby eliminating the possibility of their incorrect assembly and rendering the positioning of each sector unit (12) unique.

7. An improved tyre mould as claimed in claim 6 wherein each pair of said locator pins (17) incorporating inter-engaging male and female sockets is provided respectively in the guide channel (13) of the backing plate (14) and in the base of each sector unit (12), said male and female sockets engaging each other and thereby keeping the sectors units (12) correctly in place.

8. An improved tyre mould as claimed in claim 6 wherein each pair of said locator pins (17) incorporating inter-engaging male and female sockets is provided respectively in the opposing lateral surfaces of each sector unit (12), said male and female sockets engaging each other and thereby keeping the sectors units (12) correctly in place.

9. An improved tyre mould as claimed in any one of claims 6 to 8 wherein the locator pins (17) are circular or polygonal shaped in cross-section.

10. An improved tyre mould as claimed in any one of claims 1 to 9 wherein each sidewall plate assembly consists of a minimum of four sector units (12), the number of sector units (12) being capable of being increased depending on the diameter of the tyre being manufactured.

11. An improved tyre mould as claimed in any one of claims 1 to 10 wherein the plurality of individual sector units (12) disposed within the guide channel (13) of the backing plate (14) and which together with the backing plate (14) constitute the sidewall plate assembly is provided at the end of the assembled sector units (12) with a locking unit (18) in pressured contact with last sector unit (12) of the assembly thereby ensuring that there is no undesirable gap between each of the sector units (12) and that the final sector unit of the assembly is in precise alignment with and relative to the other sector units (12).

12. An improved tyre mould as claimed in claim 11 wherein said locking unit (18) comprises a rectangular plate disposed horizontally within the channel (13) of the backing plate (14) in pressured contact with last sector unit of the assembled units (12).

13. An improved tyre mould as claimed in claim 11 or 12 wherein for even greater security, the plate comprising the locking unit (18) is provided with securing means in the form of jacking screws (19) which enable the entire assembly of sector units (12) to be locked firmly in place within the circumferential channel (13) of the backing plate (14).

14. An improved tyre mould as claimed in any one of claims 11 to 13 wherein as a still further security measure, each sector unit (12) is fixed to the backing plate (14) by means of Allen bolts.

## Patentansprüche

1. Verbesserte Reifenform mit modifizierten sektorierten Seitenwandplatten, die zur Herstellung von Reifen fähig sind, die keine anschließende Entfernung unansehnlicher Wölbungen oder Vorsprünge von deren Seitenwänden erfordert, wobei die Reifenform zwischen entgegengesetzt angeordneten oberen und unteren Behälterplatten (1, 2) vorgesehen ist, wobei eine Seitenwandplatte an jede Behälterplatte (1, 2) anliegend vorgesehen ist, wobei jede Seitenwandplatte aus einer ringförmigen Trägerplatte (14) besteht, die in deren Innenfläche mit einem umlaufenden Führungskanal (13) versehen ist,
**dadurch gekennzeichnet, dass** der Führungskanal (13) dazu eingerichtet ist, darin eine Mehrzahl einzelner Sektoreinheiten (12) aufzunehmen und mit diesen in Eingriff zu gehen, wobei die Trägerplatte (14) und die Sektoreinheiten (12) zusammen eine Seitenwandplattenbaugruppe bilden, wobei jede Sektoreinheit (12) in nicht abgedichteter Beziehung zu der nächsten Einheit (12) angeordnet ist, wobei zwischen den gegenüberliegenden Seitenflächen jedes Paares nebeneinander angeordneter Einheiten (12) an deren Basis eine Aussparung oder Abstand (16) vorhanden ist, wobei die oberen Kanten der gegenüberliegenden Flächen jedes Paares von Einheiten (12) einander entlang einer Linie berühren, die eine als Sektortrennung (15) bezeichnete Trennfläche bildet, wobei jegliche Luft oder jegliches Gas, das zwischen den Seitenwänden des zu vulkanisierenden Reifens und den beiden damit in Kontakt stehenden Seitenwandplattenbaugruppen der Form eingeschlossen ist, durch die mehreren Sektortrennungen (15) entlang der oberen Kanten der gegenüberliegenden Flächen jedes Paares nebeneinander angeordneter Sektoreinheiten (12) strömt, um sich in den Aussparungen (16) zwischen jedem Paar Sektoreinheiten (12) zu sammeln und von dort in die Umgebung zu entweichen.

2. Verbesserte Reifenform nach Anspruch 1, wobei die Trägerplatte (14) mit ihrem Führungskanal (13), in dem die Sektoreinheiten (12) montiert sind, mit einer Umfangsnut versehen ist, um sich mit den Aussparungen oder Abständen (16) zwischen den gegenüberliegenden Seitenflächen jedes Paars nebeneinander angeordneter Einheiten (12) an deren Basis zu verbinden, um das Entweichen von zwischen den Seitenwänden des aushärtenden Reifens und den Seitenwandplattenbaugruppen der Form eingeschlossener/m Luft oder Gas an die Umgebung zu ermöglichen.

3. Verbesserte Reifenform nach Anspruch 1 oder 2, wobei die Breite jeder Sektoreinheit (12) vom Außenumfang der Seitenwandbaugruppe zu deren Innenumfang zur Position jedes Reifenwulstrings (5) der Form nach unten verjüngt ist.

4. Verbesserte Reifenform nach einem der Ansprüche 1 bis 3, wobei das Profil jeder Sektoreinheit (12) gerade, gekrümmt, mit einer angewinkelten Fläche ausgebildet oder wellenförmig ist.

5. Verbesserte Reifenform nach einem der Ansprüche 1 bis 4, wobei die Seitenwandplattenbaugruppe mit einer Verriegelungseinrichtung versehen ist, um zu gewährleisten, dass jede der Sektoreinheiten (12) in der korrekten Reihenfolge montiert wird.

6. Verbesserte Reifenform nach Anspruch 5, wobei die Verriegelungseinrichtung eine Reihe ineinander eingreifende Lokalisierungsstifte (17) umfasst, wobei jedes Paar Lokalisierungsstifte (17) mit ineinander eingreifenden aufzunehmenden und aufnehmenden Buchsen versehen ist, die, wenn sie im Eingriff sind, gewährleisten, dass die Sektoreinheiten (12) in der korrekten Reihenfolge montiert sind, wodurch die Möglichkeit beseitigt wird, dass sie falsch montiert werden, und die Position jeder Sektoreinheit (12) spezifisch wird.

7. Verbesserte Reifenform nach Anspruch 6, wobei jedes Paar Lokalisierungsstifte (17) mit ineinander eingreifenden aufzunehmenden und aufnehmenden Buchsen im Führungskanal (13) der Trägerplatte (14) bzw. in der Basis jeder Sektoreinheit (12) vorgesehen ist, wobei die aufzunehmenden und aufnehmenden Buchsen ineinander eingreifen und dadurch die Sektoreinheiten (12) in ihrer korrekten Position halten.

8. Verbesserte Reifenform nach Anspruch 6, wobei jedes Paar Lokalisierungsstifte (17) mit ineinander eingreifenden aufzunehmenden und aufnehmenden Buchsen jeweils in den gegenüberliegenden Seitenflächen jeder Sektoreinheit (12) vorgesehen ist, wobei die aufzunehmenden und aufnehmenden Buchsen ineinander eingreifen und dadurch die Sektoreinheiten (12) in ihrer korrekten Position halten.

9. Verbesserte Reifenform nach einem der Ansprüche 6 bis 8, wobei die Lokalisierungsstifte (17) einen kreisförmigen oder vieleckigen Querschnitt aufweisen.

10. Verbesserte Reifenform nach einem der Ansprüche 1 bis 9, wobei jede Seitenwandplattenbaugruppe aus mindestens vier Sektoreinheiten (12) besteht, wobei die Anzahl der Sektoreinheiten (12) je nach Durchmesser des herzustellenden Reifens erhöht werden kann.

11. Verbesserte Reifenform nach einem der Ansprüche 1 bis 10, wobei die Mehrzahl einzelner Sektoreinheiten (12), die in dem Führungskanal (13) der Trägerplatte (14) angeordnet sind und zusammen mit der Trägerplatte (14) die Seitenwandplattenbaugruppe bilden, an dem Ende der montierten Sektoreinheiten (12) mit einer Verriegelungseinheit (18) in Druckkontakt mit der letzten Sektoreinheit (12) der Baugruppe vorgesehen sind, wodurch gewährleistet wird, dass es keinen unerwünschten Spalt zwischen den Sektoreinheiten (12) gibt und dass die letzte Sektoreinheit der Baugruppe mit den anderen Sektoreinheiten (12) präzise ausgerichtet ist.

12. Verbesserte Reifenform nach Anspruch 11, wobei die Verriegelungseinheit (18) eine rechteckige Platte umfasst, die horizontal in dem Kanal (13) der Trägerplatte (14) in Druckkontakt mit der letzten Sektoreinheit der montierten Einheiten (12) angeordnet ist.

13. Verbesserte Reifenform nach Anspruch 11 oder 12, wobei für noch größere Sicherheit die Platte, welche die Verriegelungseinheit (18) umfasst, mit einer Befestigungseinrichtung in Form von Schraubenwinden (19) versehen ist, welche ermöglichen, dass die gesamte Baugruppe der Sektoreinheiten (12) in dem Umfangskanal (13) der Trägerplatte (14) fest arretiert wird.

14. Verbesserte Reifenform nach einem der Ansprüche 11 bis 13, wobei als noch weitere Sicherheitsmaßnahme jede Sektoreinheit (12) mit Innensechskantschrauben an der Trägerplatte (14) befestigt ist.

## Revendications

1. Moule de pneu amélioré ayant des plaques latérales modifiées et divisées en secteurs, pouvant produire des pneus qui ne nécessitent pas l'élimination ultérieure de bosses ou de saillies disgracieuses de leurs flancs, ledit moule de pneu étant situé entre des plaques de contenant supérieure et inférieure (1, 2) disposées de manière opposée, une plaque latérale étant située contre chacune desdites plaques de contenant (1, 2), chaque plaque latérale étant constituée d'une plaque de fixation annulaire (14) pourvue dans sa surface intérieure d'un canal de guidage (13) circonférentiel,
**caractérisé en ce que** ledit canal de guidage (13) est conçu pour recevoir en son sein une pluralité d'unités de secteur (12) individuelles et venir en prise avec celles-ci, la plaque de fixation (14) et les unités de secteur (12) constituant ensemble un ensemble plaque latérale, chaque unité de secteur (12) étant juxtaposée par rapport à l'unité (12) suivante dans une relation non étanche avec un évidement ou un jeu (16) entre les surfaces latérales opposées de chaque paire d'unités (12) juxtaposées à la base de celle-ci, les bords supérieurs desdites surfaces opposées de chaque paire d'unités (12) en contact l'une avec l'autre le long d'une ligne de longueur formant une interface connue sous le nom de séparation de secteur (15), moyennant quoi l'air ou le gaz emprisonné entre les flancs du pneu en cours de vulcanisation et les deux ensembles plaque latérale du moule en contact avec ceux-ci traverse les différentes séparations de secteur (15) le long des bords supérieurs de faces opposées de chaque paire d'unités de secteur (12) juxtaposées pour s'accumuler dans les évidements (16) entre chaque paire d'unités de secteur (12) et en sortir vers l'atmosphère.

2. Moule de pneu amélioré selon la revendication 1, la plaque de fixation (14) avec son canal de guidage (13) à l'intérieur duquel les unités de secteur (12) sont assemblées étant pourvue d'une rainure circonférentielle pour se raccorder aux évidements ou espaces libres (16) entre les surfaces latérales opposées de chaque paire d'unités (12) juxtaposées à la base de celle-ci pour faciliter l'échappement de l'air ou du gaz emprisonné entre les flancs du pneu en cours de vulcanisation et les ensembles plaque latérale du moule vers l'atmosphère.

3. Moule de pneu amélioré selon la revendication 1 ou 2, la largeur de chaque unité de secteur (12) diminuant progressivement vers le bas depuis la circonférence extérieure de l'ensemble paroi latérale vers la circonférence intérieure de celui-ci jusqu'à l'emplacement de chaque anneau de bourrelet de pneu (5) du moule.

4. Moule de pneu amélioré selon l'une quelconque des revendications 1 à 3, le profil de chaque unité de secteur (12) étant droit, courbe, formé avec une surface inclinée ou en forme de vague.

5. Moule de pneu amélioré selon l'une quelconque des revendications 1 à 4, ledit ensemble plaque latérale étant pourvu d'un moyen de verrouillage pour assurer que chacune des unités de secteur (12) est assemblée dans le bon ordre.

6. Moule de pneu amélioré selon la revendication 5, ledit moyen de verrouillage comprenant une série de broches de positionnement (17) venant mutuellement en prise, chaque paire de broches de positionnement (17) étant pourvue de douilles mâle et femelle venant mutuellement en prise qui, lorsqu'elles sont en prise, assurent que lesdites unités de secteur (12) sont assemblées dans le bon ordre, éliminant ainsi la possibilité de leur assemblage incorrect et rendant le positionnement de chaque unité de secteur (12) unique.

7. Moule de pneu amélioré selon la revendication 6, chaque paire desdites broches de positionnement (17) incorporant des douilles mâle et femelle venant mutuellement en prise étant disposée respectivement dans le canal de guidage (13) de la plaque de fixation (14) et dans la base de chaque unité de secteur (12), lesdites douilles mâle et femelle venant mutuellement en prise et maintenant ainsi les unités de secteur (12) correctement en place.

8. Moule de pneu amélioré selon la revendication 6, chaque paire desdites broches de positionnement (17) incorporant des douilles mâle et femelle venant mutuellement en prise étant disposée respectivement dans les surfaces latérales opposées de chaque unité de secteur (12), lesdites douilles mâle et femelle venant mutuellement en prise et maintenant ainsi les unités de secteur (12) correctement en place.

9. Moule de pneu amélioré selon l'une quelconque des revendications 6 à 8, les broches de positionnement (17) ayant une section transversale de forme circulaire ou polygonale.

10. Moule de pneu amélioré selon l'une quelconque des revendications 1 à 9, chaque ensemble plaque latérale étant constitué d'un minimum de quatre unités de secteur (12), le nombre d'unités de secteur (12) pouvant être augmenté en fonction du diamètre du pneu fabriqué.

11. Moule de pneu amélioré selon l'une quelconque des revendications 1 à 10, la pluralité d'unités de secteur (12) individuelles disposées à l'intérieur du canal de guidage (13) de la plaque de fixation (14) et qui, conjointement avec la plaque de fixation (14), constituent l'ensemble plaque latérale étant disposée au niveau de l'extrémité des unités de secteur (12) assemblées d'une unité de verrouillage (18) en contact sous pression avec la dernière unité de secteur (12) de l'ensemble, assurant ainsi qu'il n'y a pas d'espace indésirable entre chacune des unités de secteur (12) et que l'unité de secteur finale de l'ensemble est alignée de manière précise avec les autres unités de secteur (12) et par rapport à celles-ci.

12. Moule de pneu amélioré selon la revendication 11, ladite unité de verrouillage (18) comprenant une plaque rectangulaire disposée horizontalement à l'intérieur du canal (13) de la plaque de fixation (14) en contact sous pression avec la dernière unité de secteur des unités (12) assemblées.

13. Moule de pneu amélioré selon la revendication 11 ou 12, pour une sécurité encore plus grande, la plaque comprenant l'unité de verrouillage (18) étant munie d'un moyen de fixation sous la forme de vis de calage (19) qui permettent à l'ensemble complet des unités de secteur (12) d'être fermement verrouillé en place à l'intérieur du canal (13) circonférentiel de la plaque de fixation (14).

14. Moule de pneu amélioré selon l'une quelconque des revendications 11 à 13, comme mesure de sécurité supplémentaire encore, chaque unité de secteur (12) étant fixée à la plaque de fixation (14) au moyen de boulons Allen.
